# EUROPÄISCHE PATENTSCHRIFT

(11) **EP 2 891 562 B1**
(45) Veröffentlichungstag und Bekanntmachung des Hinweises auf die Patenterteilung: **29.04.2020**
(21) Anmeldenummer: 15151421.3
(22) Anmeldetag: 13.06.2012
(51) Int. Cl.: B44C 5/04, B44F 9/02, B41M 5/00, B05D 3/14, B05D 7/06, B05D 7/00, E04F 15/10, E04F 15/20

(54) **Paneel mit Dekorschicht sowie Verfahren zum Bedrucken von Platten**
Panel with decorative layer and method for printing panels
Panneau avec couche décorative ainsi que procédé d'impression de plaques

(43) Veröffentlichungstag der Anmeldung: 08.07.2015
(62) Teilanmeldung aus: 12730190.1
(73) Patentinhaber: Xylo Technologies AG, 9052 Niederteufen (CH)
(72) Erfinder: Döhring, Dieter, 01561 Großenhain (DE)
(74) Vertreter: Mader, Joachim

(56) Entgegenhaltungen:
- EP-A1- 2 308 678
- EP-A2- 1 170 125
- EP-A2- 2 269 744
- WO-A1-2008/061791
- DE-A1-102004 032 058
- DE-A1-102006 038 750
- US-A- 4 581 255
- US-A1- 2002 061 389
- US-A1- 2007 296 795
- US-B1- 6 565 919
- "Product Portfolio High-End UV Inkjet-Systeme", 1 May 2012 (2012-05-01), swissqprint pages 1-10,

## Beschreibung

### 1. Gebiet der Erfindung

Die vorliegende Erfindung betrifft Paneele, insbesondere Wand-, Decken- oder Fußbodenpaneele, die mit einem bedruckten Dekor versehen sind, sowie ein Verfahren zum Bedrucken derartiger Paneele bzw. Platten.

### 2. Hintergrund der Erfindung

Aus dem Stand der Technik sind eine Reihe von Vorrichtungen und Verfahren bekannt, um die Oberflächen von plattenförmigen Bauteilen - im Folgenden als Platten oder Paneele bezeichnet - mit einem Dekor zu versehen. Das Versehen von Platten mit Dekoren ist insbesondere in der Möbelindustrie und bei der Herstellung von Fußböden weit verbreitet. Beispielsweise sind für Fußböden sogenannte Laminatpaneele bekannt, die relativ kostengünstig herstellbar sind und sich gut verarbeiten lassen. Sie basieren üblicherweise auf einer Trägerplatte aus einem Holzwerkstoff, wie etwa MDF oder HDF, auf deren Oberseite ein mit einem Harz imprägniertes, bedrucktes Dekorpapier aufgebracht ist. Über dem Dekorpapier wird üblicherweise zudem ein sogenanntes Overlay-Papier angebracht, um die Haltbarkeit der Oberschicht zu verbessern. Die verwendeten Papiere sind mit Harzen imprägniert, wie beispielsweise Aminoharzen, die durch Verpressen unter Einwirkung von Hitze und Druck aushärten. Um die Abriebfestigkeit der Oberflächen zu erhöhen werden die Harze zudem häufig mit abriebfesten Partikeln, wie insbesondere Korund, versehen.

In einer Weiterentwicklung derartiger Laminatpaneele wurden sogenannte direkt-bedruckte Paneele entwickelt. Bei diesen direktbedruckten Paneelen kommen in der Regel keine Papiere mehr zur Anwendung, insbesondere kein Dekorpapier. Die Dekorschicht wird vielmehr unter Verwendung von Dispersionsfarben mittels eines Tiefdruckverfahrens direkt auf die Oberfläche des Paneels bzw. der Platte gedruckt. Hierzu wird die Oberfläche geeignet vorbehandelt, insbesondere geschliffen und mit einer geeigneten Grundierung versehen, die über Walzen aufgetragen wird. Nach Aufdruck und Trocknen der Dekorschicht werden anschließend mehrere Polymerschichten (basierend z.B. auf polymerisierbaren Acrylatsystemen) aufgetragen und ausgehärtet. Die Harzschichten dienen als Schutzschicht und abriebfeste Oberfläche, wobei auch hier üblicherweise abriebfeste Partikel mit eingebettet sind.

Aus der WO 2008/061791 A1 desselben Anmelders, deren Inhalt hiermit durch Inbezugnahme vollständig aufgenommen wird, ist eine Verbesserung der oben erwähnten Polymerschichten bekannt. Der Kern der Verbesserung liegt darin, dass auf die Oberfläche eines Paneels zwei unterschiedliche flüssige Polymerschichten Nass-in-Nass übereinander aufgetragen werden, so dass an der Grenzfläche eine teilweise Vermischung der Beschichtungsmittel stattfindet. Die beiden Nass-in-Nass aufgetragenen Schichten werden dann gemeinsam ausgehärtet, wobei die ausgehärtete resultierende Schicht aufgrund der teilweisen Durchmischung einen Härtegradienten aufweist, wobei die Härte der Beschichtung mit zunehmender Tiefe von der Oberfläche der resultierenden Beschichtung her gesehen abnimmt.

Aus der DE 10 2004 009 160 B4 ist ein Verfahren zur Herstellung eines Fußbodenpaneels bekannt, bei dem auf die Oberseite einer Platte durch Aufwalzen ein Haftgrund aufgebracht wird und anschließend darauf ebenfalls durch Aufwalzen eine Grundierung. Darauf wird dann das Dekor gedruckt und anschließend wird eine hochabriebfeste sowie kratzfeste Lackschicht aufgebracht. Dieses Dokument zeigt damit ein typisches Verfahren des Standes der Technik.

Aus der WO 2011/020755 A1 ist ein verbessertes Verfahren bekannt, bei dem nach Aufwalzen einer Grundierungsschicht auf die Oberfläche einer Platte und Trocknen der Grundierung ein dekoratives Muster mittels Digitaldruck aufgebracht wird. Aus der US 2002/0061389 A1 ist ein Paneel gemäß dem Oberbegriff von Anspruch 1 bekannt.

Obwohl insbesondere die oben erwähnte WO 2008/061791 einen beträchtlichen Fortschritt im Stand der Technik darstellt, so besteht immer Bedarf für Verbesserung. Daher stellt sich die vorliegende Erfindung die Aufgabe den vorbekannten Stand der Technik zu verbessern und insbesondere ein bedrucktes Paneel bereitzustellen, das ein besonders hochwertiges Druckbild aufweist, sowie ein Verfahren, um ein derartiges verbessertes Druckbild bereitzustellen. In einem weiteren Aspekt stellt sich die Aufgabe, eine Platte sowie ein Verfahren bereitzustellen, bei dem die Haftfestigkeit der verschiedenen Schichten erhöht ist und die deshalb besonders gute Werte bei der mechanischen Beständigkeit aufweist.

Diese und andere Aufgaben, die beim Lesen der folgenden Beschreibung noch genauer genannt werden oder vom Fachmann erkannt werden können werden mit einem Paneel nach Anspruch 1 und einem Verfahren nach Anspruch 3 gelöst.

### 3. Ausführliche Beschreibung der Erfindung

Ein erfindungsgemäßes Paneel umfasst eine Trägerplatte, die mit einer Dekorschicht versehen ist. Als Trägerplatte sind insbesondere Holzwerkstoffplatten bevorzugt, wie etwa MDF (Mitteldichte Holzfaserplatte) oder HDF (Hochdichte Holzfaserplatte), Spanplatten, OSB-Platten (oriented strand board), Echtholzplatten oder ähnliches. Die Dekorschicht kann ein Dekorpapier umfassen, das mit der Trägerplatte verbunden ist, oder aber auch ein Dekor sein, das direkt auf die Platte gedruckt wurde. Wesentlich ist, dass das Dekor mittels eines digitalen Vierfarbdruckes aufgedruckt ist und dabei aus einer Vielzahl von Farbpunkten gebildet ist, die zu über 90% einer Größe von 3.000 µm² bis 8.000 µm² haben, bei einem dpi-Wert von 200 - 1.200. Der Begriff dpi-Wert ist dem Fachmann bekannt und bezeichnet die Anzahl an Farbpunkten pro Zoll (dots per inch). Der dpi-Wert gilt zumindest in einer Richtung (also horizontal oder vertikal), jedoch ist es bevorzugt, dass der dpi-Wert von 200 - 1.200 sowohl in horizontaler als vertikaler Richtung des Dekors gilt. Es hat sich überraschend gezeigt, dass beim digitalen Vierfarbdruck die erfindungsgemäße Wahl für die Flächengröße der Farbpunkte zu optisch besonders hochwertigen Dekoren führt. Dies ist insbesondere dann der Fall, wenn das Dekor eine Nachahmung einer Echtholzoberfläche ist, das heißt einer natürlichen Holzmaserung. Es hat sich hierbei gezeigt, dass eine gute Nachahmung einer Echtholzoberfläche überraschenderweise nicht erreicht werden kann, wenn besonders kleine Farbpunkte gewählt werden, oder wenn die Farbpunkte eine gewisse Größe überschreiten. Bei zu groß gewählten Farbpunkten kann ein kontrastreiches und detailreiches Bild nicht mehr erzeugt werden. Bei zu kleinen Farbpunkten, kommt es ebenfalls zu unerwünschten optischen Mängelerscheinungen, insbesondere bedingt durch eine gewisse Rasterung des Druckbildes. Auch bei einem höheren dpi-Wert bei kleinen Farbpunkte ist dies unvermeidlich, zudem führen höhere dpi-Werte direkt zu höheren Kosten im Druck, da entweder mehrere Druckvorgänge notwendig sind oder aufwendigere Druckanlagen.

Im digitalen Vierfarbdruck werden üblicherweise die vier Grundfarben Zyan, Magenta, Gelb und Schwarz verwendet. Jeder Farbpunkt des Druckbildes wird dabei durch eine dieser vier Druckfarben gebildet. Aus den vier Farben des Vierfarbdrucks kann beinahe jeder beliebige Farbeindruck erzeugt werden, indem die Anzahl der verschiedenen Farbpunkte auf einer Fläche variiert wird. Unter sehr starker Mikroskop-Vergrößerung lassen sich die einzelnen Farbpunkte noch unterscheiden. Für das menschliche Auge sind die einzelnen Farbpunkte jedoch nicht wahrnehmbar, sondern es entsteht ein flächiger Farbeindruck. Dies wird weiter unten detaillierter unter Bezugnahme auf die Figuren beschrieben.

Erfindungsgemäß haben die Farbpunkte eine Größe von 3.000µm² bis 8.000µm² und am meisten bevorzugt von 3.500µm² bis 5.000µm². Dabei sollten mindestens 90% der Farbpunkte in diesen Größenbereichen liegen. Als dpi-Wert ist generell ein Wert von 280 - 1.200 bevorzugt, und noch mehr bevorzugt von 300 - 400. Der dpi-Wert sollte zumindest in einer Richtung (d.h. horizontal oder vertikal) gegeben sein, gilt jedoch vorzugsweise in beide (vertikale und horizontale) Richtung.

Die vorliegende Erfindung betrifft auch ein Verfahren zum Bedrucken von Platten, insbesondere von Wand-, Decken- oder Fußbodenpaneelen. In einem ersten Schritt wird eine Platte, wie etwa die oben angegebenen Holzwerkstoffplatten, bereitgestellt. Auf die Platte wird, nachdem diese optional vorbehandelt wurde, beispielsweise durch Auftragen einer Spachtelmasse, Abschleifen und Auftragen eines Haftprimers, eine Grundierung aufgetragen. Das Auftragen der Grundierung erfolgt dabei mittels eines Vorhangbeschichtungsverfahrens, d.h. mittels eines flüssigen Vorhangs von Beschichtungsmaterial durch den die Platte geführt wird. Nach einem optionalen Trocken und/oder Aushärten der Grundierung und eventuell weiterer Zwischenbehandlungsschritte wie etwa Abschleifen oder Auftragen eines Primers, wird die Oberfläche der Grundierung mittels mindestens einer der folgenden Maßnahmen behandelt: einer Coronabehandlung; einer Plasmabehandlung und/oder am meisten bevorzugt durch das Auftragen eines Öls. Nach diesen Behandlungsschritten und optionalen weiteren Trocknungsschritten wird dann ein dekoratives Dekor auf die Platte gedruckt.

Vorzugsweise basiert die Grundierung auf einer wässrigen Dispersion (bevorzugt einem wässrigen Acrylat-System), welche eine geeignete Zusammensetzung aufweist, so dass sie mittels eines Vorhangbeschichtungsverfahren aufgetragen werden kann. Im Stand der Technik wurde die Grundierung bisher üblicherweise in einem Walzenauftragsverfahren auf die Oberfläche der Trägerschicht aufgetragen. Bei derartigen Walzenauftragsverfahren wird das Beschichtungsmaterial (die Grundierung) direkt von der Walze auf die zu beschichtenden Oberflächen abgegeben oder indirekt über ein Beschichtungsband, das mittels einer Presswalze auf die zu beschichtenden Bauteile gepresst wird. Die Erfinder der vorliegenden Anmeldung haben festgestellt, dass Oberflächen, die auf diese Weise hergestellt wurden insbesondere bei fein detaillierten Druckbildern, wie sie typischerweise bei der Nachahmung von Echtholzoberflächen notwendig sind, nicht die eigentlich zu erwartende Auflösung und Schärfe erreichen. Insbesondere kommt es bei Verwendung von polymerisierbaren Druckfarben häufig zu störenden Streifen im Druckbild. Die Erfinder haben nun überraschend festgestellt, dass diese Probleme vermieden werden können, wenn man statt eines Walzenauftragsverfahrens ein Vorhangbeschichtungsverfahren verwendet. Es wird vermutet, dass die Walzen bei Walzenauftragsverfahren, sei es, dass das Beschichtungsmaterial direkt von der Walze auf die zu beschichtende Oberfläche aufgetragen wird oder indirekt, über ein Beschichtungsband, aufgrund ihrer Rundung in der übertragenen Beschichtung eine minimale Welligkeit der Oberfläche erzeugen. Die Berge und Täler dieser welligen Oberfläche sind so klein, dass die so hergestellten Oberflächen mit herkömmlichen Tiefdruckverfahren gut bedruckt werden können. Es wird jedoch vermutet, dass diese sehr geringe Unebenheit der so beschichteten Oberfläche bei der Verwendung des Digitaldrucks möglicherweise aufgrund elektrischer Potentialdifferenzen, zu einem nicht optimalen Druckbild führen können. In jedem Fall, unabhängig vom Druckverfahren, kann durch das Gießen der Grundierung (mittels Vorhangbeschichtung) die unerwünschte Streifenbildung wirksam unterbunden werden.

Vorhangbeschichtungsverfahren und entsprechende Anlage sind dem Fachmann aus dem Stand der Technik (beispielsweise aus der EP 1 252 937 A1) vorbekannt, so dass auf eine detaillierte Beschreibung derselben hier verzichtet werden kann. Wichtig ist, dass bei Vorhangbeschichtungsverfahren ein flüssiger Vorhang von Beschichtungsmaterial erzeugt wird, durch den die zu beschichtenden Bauteile geführt werden. Ein Auftrag über Walzen findet nicht statt.

Vorzugweise wird als Beschichtungsmaterial für die Grundierung eine Dispersion verwendet, insbesondere eine wässrige Acrylatdispersion. Wässrige Acrylatdispersionen bestehen im Wesentlichen aus einem Lösungsmittel (nämlich Wasser) und Bindemittel in Form von Kunststoffpolymeren (Acrylate), die sich bei Verdunstung des Lösungsmittels zusammenlagern und eine feste geschlossene Schicht bilden, sowie optional Farb-Pigmente zur Erzeugung der gewünschten Deckung und des gewünschten Grundfarbtons. Die Härtung dieser Acrylatdispersionen erfolgt also nicht durch eine Polymerisation, sondern durch ein Verflüchtigen des Lösungsmittels, da die Bindemittel bereits als Polymere vorliegen. Die in der Dispersion enthaltenen Polymere verbinden sich bei Verdunstung auf rein physikalische Weise und bilden eine geschlossene Schicht.

Die Erfinder haben überraschend festgestellt, dass das Druckbild eines aufgedruckten Dekors verbessert werde kann, wenn die Grundierung, nach optionalen weiteren Zwischenbehandlungsschritten, einer besonderen Oberflächenbehandlung unterzogen wird. Eine geeignete Behandlung der Oberfläche ist die sogenannte Coronabehandlung. Die Coronabehandlung ist ein elektro-chemisches Verfahren zur Oberflächenmodifikation von insbesondere Kunststoffen, und die Grundsätze der Coronabehandlung sind aus dem Stand der Technik bekannt, so dass auf eine detaillierte Erläuterung hier verzichtet wird. Wichtig bei der Coronabehandlung ist nur, dass eine oder mehrere Hochspannungselektroden zur Anwendung kommen, die im Abstand von wenigen Millimetern zu den behandelnden Oberflächen angeordnet sind. Wird die Oberfläche an den Hochspannungselektroden vorbeigeführt, kommt es zu Oxidationsreaktionen an der Oberfläche, wobei üblicherweise der Sauerstoffgehalt der Luft verwendet wird.

Alternativ kann auch eine Plasmabehandlung der Oberflächen durchgeführt werden. Auch Plasmaverfahren für Oberflächenbehandlungen sind aus dem Stand der Technik grundsätzlich bekannt. Eine Plasmabehandlung funktioniert beispielsweise mittels einer Plasmadüse, in der über eine Entladung ein Lichtbogen erzeugt wird, durch den ein Prozess-Gas in den Plasmazustand überführt wird. Das Prozess-Gas, wie etwa Luft, wird durch den Düsenkopf auf die Oberfläche des zu behandelnden Materials gerichtet.

Obwohl die Zwischenbehandlung mit Corona-Entladung und Plasmaentladung eine deutliche Verbesserung hervorruft ist das Auftragen eines Öls in wässriger Verdünnung besonders bevorzugt. Es hat sich gezeigt, dass durch das Auftragen eines Öls besonders hochwertige Druckbilder erzeugt werden können ohne die Notwendigkeit einer apparativ teuren Plasma- oder Coronabehandlung. Es wird vermutet, dass die Fettsäuren des Öls sich gut an den polaren Gruppen des Gießgrundmaterials anlagern und dabei die Oberflächenspannung herabsenken, so dass eine geeignete Benetzung der Tinten-Tröpfchen auf der Oberfläche erfolgt. Bei der Verwendung von ungesättigten Fettsäuren können die Doppelbindungen nach einer optional aufgebrachten Polymerbeschichtung und UV-initiierter Polymerisation in chemische Reaktion treten, wodurch es zu besonders stabilen Verbindungen der verschiedenen Schichten auf der Platte kommt. Als Öl kommt jedes Öl in Frage, wobei die besten Ergebnisse jedoch mit natürlichem Öl wie insbesondere Leinöl, Palmöl, Sonnenblumenöl oder Rapsöl erzielt werden. Dabei hat sich herausgestellt, dass insbesondere ein hoher Anteil ungesättigter Fettsäuren zu besonders guten Ergebnissen führt. Zum einen verbessert ein hoher Anteil an ungesättigten Fettsäuren den optischen Eindruck des Druckbildes, zum anderen können ungesättigte Fettsäuren im Zusammenhang mit einer später aufgebrachten Polymerschicht zu besonders gut haftenden Oberflächen führen. Generell bevorzugt sollte das Öl daher einen hohen Gewichtsanteil ungesättigter Fettsäuren haben, insbesondere von mindestens 20%, bevorzugt mindestens 30%, mehr bevorzugt von mindestens 50% und am meisten bevorzugt von mindestens 80%.

An Stelle der Ölemulsion können auch andere Verbindungen aufgetragen werden, die, obwohl nicht erfindungsgemäß, in ähnlicher Weise wirken und einen guten Effekt auf das Druckergebnis haben. So kann man ein vergleichbares Ergebnis erhalten, wenn man auf die Grundierung ein aliphatisches Polyurethanacrylat in einer Menge von 1-20 g/m², bevorzugt 3 - 6 g/m² aufwalzt, darauf digital druckt und den weiteren Oligomeraufbau wie beschrieben appliziert. Das Polyurethanacrylat wird einerseits über Wasserstoffbrückenbindungen an die Acrylatmatrix der Grundierung angeklammert und andererseits über Doppelbindungen in das Polymernetzwerk bestehend aus diesem Polyurethanacrylat, den polymerisationsfähigen Druckfarben und den darauf folgenden Oligomerschichten.

Es ist dem Fachmann verständlich, dass die aufgeführten Verbindungen nur Beispielcharakter tragen können. Verallgemeinernd für die gefundene Lehre gilt: Besonders geeignet zur Verbesserung des Druckbildes sind Verbindungen, die drei Wesensmerkmale aufweisen: funktionelle Gruppen, die über Nebenvalenzbindungen an die Grundierung verankert werden können; ein apolares Rückgrat besitzen, welches in der Polarität auf die Polarität der Druckfarbe angepasst ist und Doppelbindungen, die bei der strahlenhärtenden Polymerisation in die Polymerschicht eingebunden werden. Mindestens müssen aber diese Verbindungen zwei Merkmale aufweisen: funktionelle Gruppen, die über Nebenvalenzbindungen genügend verankert werden und ein apolares Rückgrat, das die geeignete Polarität passend zur Druckfarbe liefert.

Experimentelle Versuche haben gezeigt, dass die Menge an aufgebrachtem Öl pro m² Oberfläche nur gering sein braucht. Vorzugsweise sollten dabei etwa 0,1 - 10 g Öl/m² aufgetragen werden, mehr bevorzugt 1,0 - 5 g/m² noch mehr bevorzugt 1, 5 - 3 g m² und am meisten bevorzugt 1,6 - 2,5 g Öl /m² zu beschichtender Oberfläche. Die Auftragung der gewünschten Ölmenge lässt sich am besten dosieren, wenn das Öl in wässriger Verdünnung aufgebracht wird. Die wässrige Verdünnung sollte nach Gewichtsanteilen vorzugsweise so aufgeteilt sein, dass auf ein Teil Öl 1 - 30 Teile Wasser kommen. Vorzugsweise auf ein Teil Öl 3 - 15 Teile Wasser, mehr bevorzugt auf ein Teil Öl 4 - 10 Teile Wasser und am meisten bevorzugt auf ein Teil Öl 5 - 7 Teile Wasser. Dies bedeutet etwa, dass bei einem Mischungsverhältnis von einem Teil Öl auf 8 Teile Wasser für 1 g Öl 8g Wasser hinzugemischt werden. Wenn das Öl in wässriger Verdünnung aufgetragen wird, sollte vor dem Bedrucken der Oberfläche vorzugsweise ein Trocknungsschritt durchgeführt werden, bzw. ein entsprechender Zeitraum gewartet werden, bevor mit dem Druck begonnen wird. Dem Fachmann ist es dabei klar, dass die Verdunstung bzw. Trocknung sehr schnell erfolgt, da pro m² Oberfläche absolut gesehen nur sehr wenig Öl in wässriger Verdünnung aufgebracht wird, d.h. die absolute Menge äußerst gering ist.

Erfindungsgemäß wird das Dekor mittels eines digitalen Vierfarbdrucks aufgedruckt, wie er oben beschrieben wurde.

Bevorzugt umfassen die Paneele bzw. Platten über der Dekorschicht bzw. dem Dekor eine gehärtete Polymerschicht als Nutzschicht, die vorzugsweise einen Härtegradienten aufweist, gemäß der oben erwähnten WO 2008/061791. Die Polymerschicht wird vorzugsweise in Form eines polymerisierbaren Acrylatsystems aufgetragen, und umfasst beispielsweise 1,6 Hexandioldiacrylat, Polyester-Acrylat, Polyurethan-Acrylsäure-Esther und Diprophyllin-Glycol-Diacrylat. Bevorzugte Dicken für die Polymerschicht (Nutzschicht) nach dem Aushärten liegen bei 20 - 300µm, mehr bevorzugt bei 40 - 250 µm, noch mehr bevorzugt bei 50 - 220µm und am meisten bevorzugt bei 60 - 180µm. Unter Aushärten einer Polymerschicht, bzw. eines polymerisierbaren Acrylatsystems wird hierbei die chemische Reaktion verstanden, die bei der Polymerisation stattfindet, wie insbesondere eine Polykondensation. Hiervon zu unterscheiden ist das Trocknen derartiger Schichten, bei dem lediglich das Lösungsmittel, wie etwa der Wassergehalt der Polymerschichten verdunstet bzw. auf rein physikalische Weise reduziert wird.

Das Auftragen der Polymerschicht erfolgt nach dem Aufdrucken des dekorativen Dekors auf die Oberfläche der Platte, bzw. des Paneels. Optional können nach dem Aufdrucken des Dekors weitere Verfahrens- und Bearbeitungsschritte durchgeführt werden, wie etwa das Aufbringen eines Primers oder Ähnlichen. Wie bereits erwähnt, ist es generell bevorzugt, dass die aufgetragene Polymerschicht (Nutzschicht) vorzugsweise einen Härtegradienten aufweist, so dass die Härte der Polymerschicht mit zunehmender Tiefe von der Oberfläche der Polymerschicht her gesehen im Wesentlichen kontinuierlich abnimmt. Grundsätzlich lässt sich ein derartiger Härtegradient dadurch einstellen, dass in einem ersten Schritt ein erstes flüssiges Beschichtungsmittel (erstes Oligomer) auf die Oberfläche aufgetragen wird, und in einem zweiten Schritt zumindest ein zweites flüssiges Beschichtungsmittel (zweites Oligomer) auf das noch feuchte erste Beschichtungsmittel. Durch das Nass-in-Nass auftragen kommt es an der Grenzfläche zu einer teilweisen Vermischung. In einem darauffolgenden Schritt wird das Beschichtungsmittel, bzw. die beiden aufgetragenen Beschichtungsmittel gemeinsam vorzugweise mittels Strahlung ausgehärtet. Zur Erstellung eines Härtegradienten sollten die beiden verbundenen Materialien für die erste und zweite Schicht unterschiedlich sein und insbesondere einen unterschiedlichen Anteil an C-C Doppelbindungen aufweisen, so dass nach Aushärtung aufgrund der teilweisen Vermischung ein Härtegradient entsteht. Die technischen Details sind dem Fachmann jedoch aus der oben erwähnten WO 2008/061791 vorbekannt, so dass hier auf eine detaillierte Darstellung verzichtet wird.

Bei einer vorteilhaften Weiterbildung basiert die verwendete Druckfarbe auf einem polymerisierbaren Acrylat. Üblicherweise kommen im Stand der Technik als Druckfarbe (Tinte) Dispersionsfarben zum Einsatz, wie insbesondere Acryl-Farben. Diese Dispersionsfarben werden regelmäßig bei dem üblicherweise zum Einsatz kommenden Tiefdruckverfahren verwendet. Dispersionsfarben sind Druckfarben, die in der Regel aus drei Hauptbestandteilen bestehen, nämlich (a) einem Lösungsmittel (heutzutage üblicherweise Wasser), (b) Bindemittel in Form von Kunststoffpolymeren (Acrylate), die sich bei Verdunstung des Lösungsmittels zusammenlagern und eine feste Schicht bilden, sowie (c) Farbpigmente zur Erzeugung der gewünschten Deckung und des gewünschten Farbtons. Die Trocknung dieser Dispersionsfarben erfolgt also nicht durch eine Polymerisation, sondern durch ein Verflüchtigen oder Verdunsten des Lösungsmittels, da die Bindemittel selbst bereits als Polymere vorliegen. Die in der Dispersion enthaltenen Polymere verbinden sich bei Verflüssigung des Bindemittels auf rein physikalische Weise und bilden somit eine geschlossene Schicht.

Die Anmelder haben nun überraschend festgestellt, dass verbesserte Hafteigenschaften des Schichtsystems erreicht werden können, wenn nicht die üblichen Dispersionsfarben verwendet werden, sondern stattdessen polymerisierbare Druckfarben verwendet werden. Dies ist insbesondere bei der bevorzugten Anwendung mit einer Polymerschicht vorteilhaft, insbesondere mit Härtegradient, wie im Folgenden erläutert werden wird. Der positive Effekt ist besonders ausgeprägt, wenn die Druckfarbe der Dekorschicht (wenn die Dekorschicht direkt aufgetragen wird, wie etwa im Digitaldruck, besteht die Dekorschicht quasi aus der Druckfarbe) und die Polymerschicht(en) gemeinsam ausgehärtet bzw. polymerisiert werden. Durch die gemeinsame Aushärtung

(Polymerisation/Polykondensation) der Acrylatsysteme von Druckfarbe und Polymerschicht erfolgt eine chemische Vernetzung an der Grenzfläche der beiden Schichten, von der angenommen wird, dass sie für die erheblich verbesserte Haftung der Schichten verantwortlich ist. Die herkömmlich verwendeten Dispersionsdruckfarben weisen keine polymerisierbaren Acrylatsysteme auf, so dass keine derartige chemische Vernetzung zwischen Druckfarbe und der Polymerschicht stattfinden kann. Die bevorzugt zu verwendenden polymerisierbaren Druckfarben sind insbesondere polymerisierbare Acrylatsysteme. Polymerisierbare Druckfarben enthalten als Hauptbestandteile Bindemittel, nämlich reaktive Doppelbindungen enthaltene Harze, also Monomere bzw. Oligomere, wie etwa Acrylat-Monomere und Acrylat-Oligomere; optional Foto-Initiatoren für strahlenhärtbare Druckfarben, und zusätzlich Additive wie etwa Entschäumer, Verlaufs-Additive, Verdickungsmittel und Farbpigmente im geringen Umfang. Generell ist es bevorzugt, dass die verwendeten polymerisierbaren Druckfarben für die vorliegende Erfindung strahlenhärtbare, wie insbesondere durch UV-Strahlen härtbare (UV-härtbare) Druckfarben sind. Deshalb ist in einer besonders bevorzugten Ausführungsform der Erfindung die verwendete Druckfrage ein UV-härtbares, polymerisierbares Acrylatsystem.

Bevorzugt sollte als Beschichtungsmittel für die Grundierung kein UVaushärtbarer Lack verwendet werden. Die Erfahrung hat gezeigt, dass insbesondere bei der Verwendung von Ölen zur Oberflächenbehandlung der Grundierung die Haftfestigkeit derartiger Lacke verschlechtert werden kann.

Im Folgenden soll das erfindungsgemäße Verfahren in Form eines nicht einschränkenden Beispiels näher erläutert werden.

Als Platte wird eine HDF-Trägerplatte mit einer Stärke von 8mm zunächst über ein Walzenauftragswerk mit einem Primer auf Basis einer handelsüblichen wässrigen Acrylat-Dispersion versehen. Anschließend wird die Platte mittels einer Spachtelmasse geglättet. Nach Vortrocknung wird eine Grundierung über ein Vorhangbeschichtungsverfahren appliziert. Die Grundierung basiert auf einer mit Füllstoffen und Farbpigmenten versetzten wässrigen Acrylat-Dispersion. Nach jedem dieser Beschichtungsschritte erfolgt ein Zwischentrocknen bei Temperaturen zwischen 80 und 200°C. Auf die Grundierung wird über ein Walzenauftragswerk ein Rapsöl in achtfacher wässriger Verdünnung aufgetragen. Die Auftragsmenge wird derart eingestellt, dass pro m² Oberfläche etwa 2g (reines) Rapsöl aufgetragen werden. Anschließend wird mittels eines Digitaldruckers ein Dekorbild aufgedruckt. Hierzu werden UV-Strahlen härtbare Digitaldruckfarben verwendet, wobei eine Farbmenge von etwa 2g/m² benötigt werden. Darauf folgend wird eine Polymerschicht aufgetragen, in Form eines doppelbindungshaltigen, mit Foto-Initiatoren versehenen Strahlen härtbaren Oligomers. Auf diese nasse Polymerschicht wird eine zweite Polymerschicht aus einem doppelbindungshaltigen, mit Foto-Initiatoren versehenen Strahlen härtbaren Oligomers appliziert, so dass sich die beiden Schichten an deren Grenzflächen teilweise vermischen können. Anschließend werden alle drei Schichten, d.h. die polymerisierbare Druckfarbe, die erste Polymerschicht und die zweite Polymerschicht gemeinsam mittels einer UV-Strahlung polymerisiert, d.h. ausgehärtet. Die so fertig beschichtete Platte kann dann in weiteren Prozessen in Paneele zerteilt werden, die mit an sich bekannten Kopplungselementen versehen werden können, so dass mehrere Paneele zu einem Fußboden zusammengelegt werden können.

Durch das gemeinsame Aushärten der Polymerschichten und der polymerisierbaren Druckfarbe entstehen chemische Bindungen zwischen Druckfarbe und Polymerschichten (Nutzschichten) auch unter Einbeziehung der Doppelbindungen der Fettsäuren des applizierten Öls was nach Auffassung der Erfinder zu den besonders guten mechanischen Widerstandswerten der so beschichteten Paneele oder Platten führt. Im Stand der Technik erfolgte die Haftung im Wesentlichen nur durch physikalische Vorgänge, da keine gemeinsame Aushärtung, d.h. Polymerisation, zwischen der Druckfarbe und den aufgebrachten Polymerschichten stattfand.

### 4. Beschreibung von bevorzugten Ausführungsformen

Im Folgenden wird die vorliegende Erfindung unter Bezugnahme auf die beigefügten Figuren genauer erläutert. Hierbei zeigen:
Fig. 1 eine Mikroskop-Aufnahme eines Druckbildes nach dem Stand der Technik;
Fig. 2 eine Mikroskop-Aufnahme eines Druckbildes mit vorhergehender Coronabehandlung;
Fig. 3 eine Mikroskop-Aufnahme eines Druckbildes mit vorhergehender Plasma-Behandlung;
Fig. 4 eine Mikroskop-Aufnahme eines Druckbildes mit vorhergehender Behandlung mit verdünntem Rapsöl;
Fig. 5 einen beispielhaften Schichtaufbau; und
Fig. 6 eine Anlage zur Durchführung des erfindungsgemäßen Verfahrens in schematischer Ansicht.

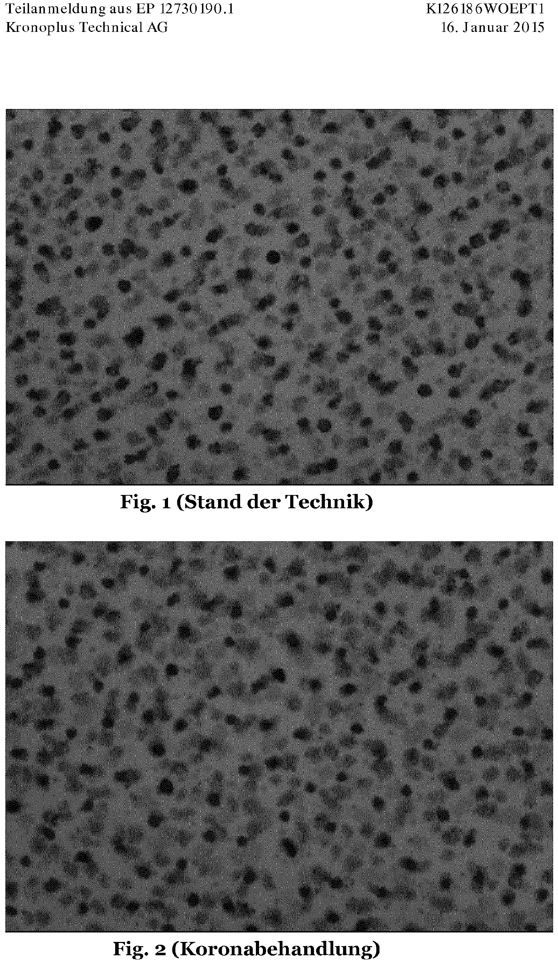

In den Figuren 1 - 4 sind verschiedene mikroskopische Vergrößerungen von Vierfarbdigitaldruckbildern gezeigt. Die Vergrößerungen sind dem Druckbild eines Echtholzdekors entnommen. Wie man den Figuren entnehmen kann, ist das Dekor aus einer Vielzahl von Farbpunkten gebildet. In der mikroskopischen Vergrößerung ist zu erkennen, dass die Farbpunkte diskrete, voneinander getrennte Punkte sind. Ohne Vergrößerung ist dies mit dem bloßen Auge nicht zu erkennen. Die Figuren 1 - 4 sind in schwarz/weiß gehalten, jedoch ist grundsätzlich zu erkennen, dass die Größe und der Verlauf der einzelnen Farbpunkte in den Figuren variiert. In Fig. 1 ist dabei ein Vierfarbdigitaldruckbild nach dem Stand der Technik gezeigt. Der Digitaldruck wurde unmittelbar nach Auftrag der Grundierung aufgetragen. Die einzelnen Farbpunkte sind klar voneinander abgegrenzt, wie dies eigentlich bei dieser Drucktechnik erwünscht ist. Tatsächlich ist das in Fig. 1 gezeigte Druckbild nach dem Stand der Technik technisch sehr anspruchsvoll. In der Praxis hat sich jedoch gezeigt, dass insbesondere bei der Nachbildung von Echtholzdekoren dieses genau abgegrenzte und technisch anspruchsvolle Druckbild nicht optimal geeignet ist um eine natürliche Holzoberfläche nachzuahmen. Die Erfinder der vorliegenden Anmeldung haben herausgefunden, dass für das menschliche Auge qualitativ hochwertigere Druckbilder erzeugt werden können, wenn die Oberfläche vor dem Bedrucken mit einer der folgenden Maßnahmen vorbehandelt wurde. Coronabehandlung; Plasmabehandlung und am meisten bevorzugt ein Auftragen eines Öls, vorzugweise in wässriger Emulsion.

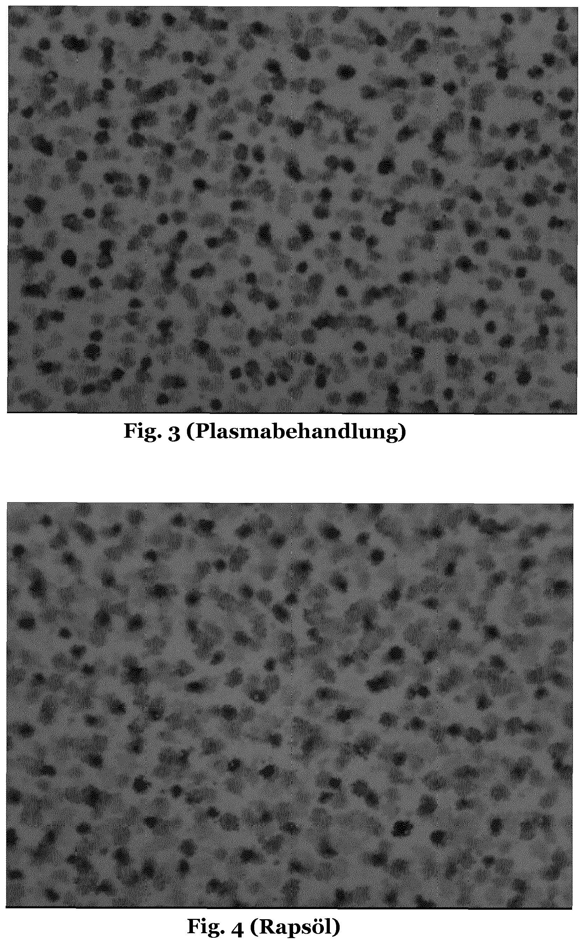

In Figur 2 ist ein Druckbild in Mikroskopischer Vergrößerung gezeigt, bei dem vor dem Druck die Grundierung einer Coronabehandlung unterzogen wurde. Wie man der Figur 2 entnehmen kann, sind die einzelnen Farbpunkte etwas stärker verlaufen und decken somit mehr von der Fläche ab. Ähnlich gute Ergebnisse lassen sich mit einer Plasmabehandlung erzielen, wie an der Fig. 3 zu erkennen ist.

Die besten Ergebnisse haben sich jedoch überraschend gezeigt, wenn nach dem Aufbringen der Grundierung und einer eventuellen Trocknung und/oder Härtung der Grundierung auf diese Oberfläche ein Öl in wässriger Emulsion aufgetragen wird. In dem gezeigten Beispiel wurde hierzu Rapsöl verwendet, das in einer Verdünnung mit Wasser von einem Teil Öl und 8 Teilen Wasser aufgetragen wurde. Dabei wurden 2g Öl pro m² aufgetragen (also etwa 18g/m² der wässrigen Öl-Wasser-Verdünnung). Die einzelnen Farbpunkte des digitalen Vierfarbdrucks, wie es der mikroskopischen Vergrößerung der Fig. 4 zu entnehmen ist, sind stark verlaufen und bieten eine gute Abdeckung des Untergrunds. Obwohl ein derartiger Verlauf üblicherweise nicht erwünscht ist, hat sich überraschend gezeigt, dass für das menschliche Auge ein derartiges Druckbild einen besonders hochwertigen Eindruck macht, insbesondere bei der Darstellung eines Echtholzdekors. Wie man den Figuren entnehmen kann, sind die Farbpunkte nicht alle gleich groß. Bei dem in Fig. 4 gezeigten Druckbild sind dabei die meisten Farbpunkte in einem Größenbereich von 2000 µm² bis 3500 µm², wodurch sie nicht im erfindungsgemäßen Bereich liegen. Außerdem finden sich in horizontaler Richtung gesehen etwa 360 Farbpunkte pro Inch (360 dpi). Ein ähnlicher Wert ergibt sich für die vertikale Ausrichtung in der ebenfalls etwa 360 Farbpunkte pro Inch gezählt werden (360 dpi).

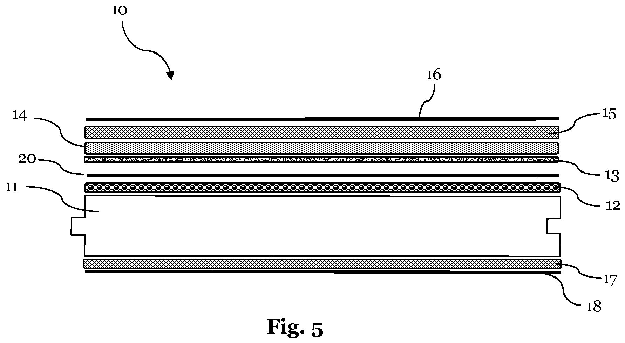

In Fig. 5 ist ein schematischer Schichtaufbau für ein Paneel bzw. eine Platte gemäß der Erfindung gezeigt. Die Darstellung ist rein schematisch und nicht maßstabsgetreu. Insbesondere ist die eigentliche Trägerplatte 11 erheblich dicker als die übrigen Schichten 12 - 16, die im Bereich von einigen µm liegen. Die gezeigte Trägerplatte 11 ist eine HDF-Platte mit ca. 8mm stärker. An der Unterseite der Trägerplatte 11 befindet sich eine Schallschutzschicht 17 sowie eine darauf angebrachte Feuchtigkeitsschutzschicht 18. Auf der Oberseite, d.h. einer Hauptoberfläche der Platte, ist die Grundierung 12 aufgebracht. Auf der Grundierung 12 ist eine Dekorschicht bzw. ein Dekor 13 vorgesehen. Das Dekor 13 wurde mittels einer polymerisierbaren Druckfarbe im digitalen Vierfarbdruck aufgebracht. Über der Dekorschicht 13 befinden sich zwei Polymerschichten, die die eigentliche Nutzschicht des Paneels 10 darstellen. Die Polymerschichten 14 und 15 basieren auf einem Acrylatsystem und weisen einen Härtegradienten auf. Zur Erhöhung der Abriebfestigkeit der Oberfläche können den Polymerschichten abriebfeste Partikel, insbesondere Korund beigefügt sein, wie dies dem Fachmann bekannt ist. Als oberste Schicht befindet sich eine Toplack-Schicht 16. Zwischen den einzelnen Schichten, insbesondere zwischen der Oberfläche der Platte 11 und der Grundierungsschicht 12 können weitere Schichten vorgesehen sein, wie insbesondere Primer zur besseren Haftvermittlung.

Erfindungsgemäß wurde auf die Grundierung 12 ein Öl in wässriger Emulsion aufgetragen, und bildet eine Ölschicht 20.

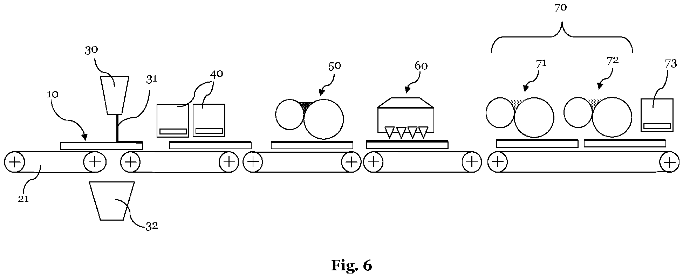

Im Folgenden soll anhand der Fig. 6 das erfindungsgemäße Verfahren beschrieben werden. Fi. 6 zeigt schematisch eine Beschichtungsanlage zur Beschichtung von Platten bzw. Paneelen 10. Die Platten 10, die beispielsweise Massivholzplatten, MDF-, HDF- oder Spanplatten sein können, werden über eine Rollenförderanlage 21 durch die verschiedenen Stationen der Beschichtungsanlage geführt. Die dargestellten Beschichtungsstationen sind nicht abschließend zu verstehen, sondern dienen nur beispielhaft der Erläuterung des erfindungsgemäßen Verfahrens. Vor, hinter und zwischen den gezeigten Stationen können weitere Bearbeitungsstationen vorgesehen sein, wie beispielsweise weitere Trocknungsstationen, Stationen zur Aufbringung von Primern, Stationen zur Aufbringung von Spachteln usw. In der ersten dargestellten Station 30 wird die Grundierung mittels eines flüssigen Vorhangs 31 von Beschichtungsmaterial auf eine Hauptoberfläche der Platte 10 aufgetragen. Der flüssige Vorhang 31 erstreckt sich über die komplette Plattenbreite und die Platten werden durch diesen Vorhang transportiert und dabei beschichtet. Unterhalb der Vorrichtung 30 zur Ausgabe des Vorhangs befindet sich ein Auffangbehälter 32 in den der flüssige Vorhang fällt, wenn keine Platte durch den Vorhang hindurch geführt wird, wie beispielsweise bei der Lücke zwischen zwei aufeinanderfolgenden Platten. Als Beschichtungsmaterial für die Grundierung wird vorzugsweise eine wässrige Acrylat-Dispersion verwendet. In einer darauf folgenden Trocknungsstation 40 wird die aufgetragene Grundierung mit Heißluft getrocknet, d.h. der wässrigen Acrylat-Dispersion wird das Wasser entzogen. In Station 50 wird auf die Grundierung mittels Walzen ein Öl in wässriger Verdünnung aufgetragen. Das Öl ist vorzugsweise ein natürliches Öl, wie etwa Leinöl, Palmöl, Sonnenblumenöl oder Rapsöl und wird in einer Menge von 1 - 5 g Öl/m² aufgetragen.

In Station 60 wird mittels eines Digitaldrucks ein dekoratives Dekor, nämlich ein Echtholzdekor, auf die so behandelte Grundierung aufgedruckt. Optional kann zwischen den Stationen 50 und 60 ein Trocknungsschritt vorgesehen sein. Nach dem Druck wird in der Beschichtungsstation 70 eine Polymerschicht aufgetragen. Die Polymerschicht wird mit einem Härtegradienten aufgetragen, so dass die Härte der Polymerschicht mit zunehmender Tiefe von der Oberfläche der Polymerschicht her gesehen im Wesentlichen kontinuierlich abnimmt. Zu diesem Zweck wird in einer ersten Beschichtungseinheit 71 eine erste Polymerschicht basierend auf einem polymerisierbaren Acrylatsystem aufgetragen. Auf diese erste Polymerschicht wird in Station 72 eine weitere Polymerschicht Nass-in-Nass aufgetragen. Die zweite Polymerschicht weist beispielsweise einen höheren Doppelbindungsanteil auf, wie es im Detail in der oben erwähnten Anmeldung zum Härtegradienten beschrieben ist. Die beiden Polymerschichten werden in den Stationen 71 und 72 Nass-auf-Nass aufgetragen, so dass es an der Grenzfläche der beiden Schichten zu einer teilweisen Vermischung kommt. In Station 73 werden die beiden Polymerschichten unter Einwirkung von UV-Strahlung gemeinsam ausgehärtet.

Bevorzugt verwendet die Station 60 eine Druckfarbe basierend auf einem polymerisierbaren Acrylat. In diesem Fall ist es bevorzugt, dass zwischen den Stationen 60 und 70 keine Aushärtung der Druckfarbe stattfindet, sondern allenfalls ein Zwischentrocknungsschritt bei welchem Schritt dem polymerisierbaren Acrylat der Druckfarbe etwas Feuchtigkeit entzogen wird. In der Aushärtstation 73 werden dann die Druckfarbe und die ersten und zweiten Polymerschichten gemeinsam ausgehärtet, was zu einer besonders widerstandsfähigen Oberfläche führt.

In Fig. 6 ist bei der Beschichtungsstation 50 das Auftragen eines Öls in wässriger Verdünnung vorgesehen. Alternativ oder zusätzlich können hier jedoch auch Stationen zur Coronabehandlung oder Plasma-Behandlung vorgesehen sein. Beispielsweise kann zwischen Station 40 und 50 eine weitere Station zur Coronabehandlung vorgesehen sein und das Auftragen des Öls in wässriger Verdünnung erfolgt dann nach der Coronabehandlung in Station 50.

## Patentansprüche

1. Paneel (10), insbesondere Wand-, Decken- oder Fußbodenpaneel, umfassend eine Trägerplatte (11), welche Trägerplatte zumindest auf einer Hauptoberfläche mit einer Dekorschicht (13) versehen ist, die ein Dekor aufweist, dass mittels eines digitalen Vierfarbdruckes bei einem dpi-Wert von 200 bis 1.200 aufgedruckt ist, wobei das Dekor eine Nachahmung einer Echtholzoberfläche ist und aus einer Vielzahl von Farbpunkten gebildet ist, **dadurch gekennzeichnet, dass** die Farbpunkte zu über 90% eine Größe von 3.000 µm² bis 8.000 µm² haben.

2. Paneel (10) nach Anspruch 1, **dadurch gekennzeichnet, dass** die Farbpunkte zu über 90% eine Größe von 3.500 µm² bis 5.000 µm² haben.

3. Verfahren zum Bedrucken von Platten, insbesondere Wand-, Decken- oder Fußbodenpaneele (10), umfassend die folgenden Schritte in der angegebenen Reihenfolge:
(i) Bereitstellen einer Platte (11);
(ii) Auftragen einer Grundierung (12) mittels eines flüssigen Vorhangs (31) von Beschichtungsmaterials auf eine Hauptoberfläche der Platte (11);
(iii) optional Trocknen und/oder Aushärten der Grundierung (12);
(iv) Behandeln der Oberfläche der Grundierung (12) mittels zumindest einer der folgenden Maßnahmen:
a) Coronabehandlung;
b) Plasmabehandlung;
c) Auftragen eines Öls in wässriger Verdünnung;
(v) Aufbringen eines dekorativen Dekors, wobei das Dekor eine Nachahmung einer Echtholzoberfläche ist und mittels eines digitalen Vierfarbdrucks auf die Hauptoberfläche der Platte aufgedruckt wird, wobei das Dekor aus einer Vielzahl von Farbpunkten gebildet wird, die zu über 90% eine Größe von 3.000 µm² bis 8.000 µm² haben, bei einem dpi-Wert von 200 bis 1.200.

4. Verfahren zum Bedrucken von Platten nach Anspruch 3, **dadurch gekennzeichnet, dass** das Beschichtungsmaterial für die Grundierung (12) auf einer wässrigen Acrylatdispersion basiert.

5. Verfahren zum Bedrucken von Platten (10) nach Anspruch 3 oder 4, **dadurch gekennzeichnet, dass** zwischen den Schritten (i) und (ii) und/oder den Schritten (iii) und (iv) ein Primer aufgetragen wird.

6. Verfahren zum Bedrucken von Platten (10) nach einem der vorhergehenden Verfahrensansprüche, **dadurch gekennzeichnet, dass** das Öl ein natürliches Öl ist, insbesondere Leinöl, Palmöl, Sonnenblumenöl oder Rapsöl.

7. Verfahren zum Bedrucken von Platten (10) nach einem der vorhergehenden Verfahrensansprüche, **dadurch gekennzeichnet, dass** das Öl einen hohen Gewichtsanteil ungesättigter Fettsäuren enthält, insbesondere von mindestens 20 %, bevorzugt mindestens 30 %, mehr bevorzugt von mindestens 50 % und am meisten bevorzugt mindestens 80 %.

8. Verfahren zum Bedrucken von Platten (10) nach einem der vorhergehenden Verfahrensansprüche, **dadurch gekennzeichnet, dass** 0,1 bis 10 g Öl pro m² aufgetragen werden, vorzugsweise 1,0 bis 5 g/m², mehr bevorzugt 1,5 bis 3 g/m² und am meisten bevorzugt 1,6 bis 2,5 g/m².

9. Verfahren zum Bedrucken von Platten (10) nach einem der vorhergehenden Verfahrensansprüche, **dadurch gekennzeichnet, dass** in der wässrigen Verdünnung nach Gewichtsanteilen auf 1 Teil Öl 1 bis 30 Teile Wasser kommen, vorzugsweise auf 1 Teil Öl 3 bis 15 Teile Wasser, mehr bevorzugt auf 1 Teil Öl 4 bis 10 Teile Wasser und am meisten bevorzugt auf 1 Teil Öl 5 bis 7 Teile Wasser kommen.

10. Verfahren zum Bedrucken von Platten (10) nach dem vorhergehenden Verfahrensanspruch, **dadurch gekennzeichnet, dass** die Farbpunkte zu über 90% eine Größe von 3.500 µm² bis 5.000 µm² haben.

11. Verfahren zum Bedrucken von Platten (10) nach dem vorhergehenden Verfahrensanspruch oder Paneel nach Anspruch 1 oder 2, **dadurch gekennzeichnet, dass** der dpi Wert von 280 bis 1.200 ist, vorzugsweise 300 bis 400.

12. Verfahren zum Bedrucken von Platten (10) nach einem der vorhergehenden Verfahrensansprüche, **dadurch gekennzeichnet, dass** das Dekor dass das Dekor auf die Hauptoberfläche der Platte gedruckt wird und für den Druck eine polymerisierbare Druckfarbe verwendet wird; und wobei in einem nachfolgenden Schritt (vii) eine Polymerschicht (14) aufgetragen wird, welche Polymerschicht vorzugsweise einen Härtegradienten aufweist, so dass die Härte der Polymerschicht (14) mit zunehmender Tiefe von der Oberfläche der Polymerschicht (14) her gesehen im Wesentlichen kontinuierlich abnimmt.

13. Verfahren zum Bedrucken von Platten (10) nach dem vorhergehenden Verfahrensanspruch, **dadurch gekennzeichnet, dass** die Druckfarbe auf einem polymerisierbaren Acrylat basiert.

14. Verfahren zum Bedrucken von Platten (10) nach einem der vorhergehenden Verfahrensansprüche 12 oder 13, **dadurch gekennzeichnet, dass** die Polymerschicht auf einem oder mehreren der folgenden Acrylate basiert: 1,6-Hexandioldiacrylat, Polyesteracrylat, Polyurethanacrylsäureester und Dipropylenglycoldiacrylat.

15. Verfahren zum Bedrucken von Platten (10) nach dem vorhergehenden Verfahrensanspruch, **dadurch gekennzeichnet, dass** die Druckfarbe und die Polymerschicht (14) gemeinsam ausgehärtet werden, vorzugsweise mittels Strahlung.

## Claims

1. Panel (10), in particular wall, ceiling or floor panel, comprising a carrier plate (11), wherein the carrier plate is provided at least on a main surface with a decor layer (13), comprising a decor, that is imprinted by means of a digital four color print with a dpi value of 200 to 1.200, wherein
the decor is an imitation of a real-wood surface and is formed from a plurality of color dots, **characterized in that**
more than 90% of the color dots have size of 3.000 µm² to 8.000 µm².

2. Panel (10) according to claim 1, **characterized in that** the more than 90% of the color dots have size of 3.500 µm² to 5.000 µm².

3. Method for imprinting plates, in particular wall, ceiling or floor panels (10), comprising the following steps in the given order:
(i) Providing a plate (11);
(ii) Applying a basecoat (12) by means of a liquid curtain (31) of coating material on a main surface of the plate (11);
(iii) Optionally drying and/or curing the basecoat (12);
(iv) Treating the surface of the basecoat (12) with at least one of the following measures:
a) corona treatment;
b) plasma treatment;
c) applying an oil in aqueous dilution;
(v) Providing a decorative decor, wherein the decor is an imitation of a real-wood surface and is imprinted by means of a digital four color print on the main surface of the plate, wherein the decor is formed from a plurality of color dots, more than 90% of the color dots have size of 3.000 µm² to 8.000 µm² and a dpi value of 200 to 1.200.

4. Method for imprinting plates according to claim 3, **characterized in that** the coating material for the basecoat (12) is based on an aqueous acrylate dispersion.

5. Method for imprinting plates (10) according to claim 3 or 4, **characterized in that** between the steps (i) and (ii) and/or steps (iii) and (iv) a primer is applied.

6. Method for imprinting plates (10) according to one of the preceding method claims, **characterized in that** the oil is a natural oil, in particular linseed oil, palm oil, sunflower oil or canola oil.

7. Method for imprinting plates (10) according to one of the preceding method claims, **characterized in that** the oil contains a high proportion by weight of unsaturated fatty acids, in particular of at least 20%, preferably at least 30%, more preferably at least 50% and most preferably at least 80%.

8. Method for imprinting plates (10) according to one of the preceding method claims, **characterized in that** 0.1 to 10 g oil per m² are applied, preferably 1.0 to 5 g/m², more preferably 1.5 to 3 g/m² and most preferably 1.6 to 2.5 g/m².

9. Method for imprinting plates (10) according to one of the preceding method claims, **characterized in that** the aqueous dilution contains by weight 1 to 30 parts water per 1 part oil, preferably 3 to 15 parts water per 1 part oil, more preferably 4 to 10 parts water per 1 part oil, and most preferably 5 to 7 parts water per 1 part oil.

10. Method for imprinting plates (10) according to the preceding method claim, **characterized in that** the more than 90% of the color dots have size of 3.500 µm² to 5.000 µm².

11. Method for imprinting plates (10) according to the preceding method claim or panel according to claim 1 or 2, **characterized in that** the dpi value is from 280 to 1.200, preferably 300 to 400.

12. Method for imprinting plates (10) according to one of the preceding method claims, **characterized in that** the decor is imprinted on the main surface of the plate (11) and **in that** for imprinting a polymerizable printing ink is used; and wherein in a following step (vii) a polymer layer (14) is applied, which polymer layer preferably has a hardness gradient such that the hardness of the polymer layer (14) decreases substantially continuously with increasing depth as seen from the surface of the polymer layer (14).

13. Method for imprinting plates (10) according to the preceding method claim, **characterized in that** the printing ink is based on a polymerizable acrylate.

14. Method for imprinting plates (10) according to any one of the preceding method claims 12 or 13, **characterized in that** the polymer layer is based on one or more of the following acrylates: 1,6- hexane-diol-di-acrylate, polyester-acrylate, polyurethane-acryl-acid-ester and di-propylene-glycol-di-acrylate.

15. Method for imprinting plates according to the preceding method claim, **characterized in that** the printing ink and the polymer layer (14) are cured jointly, preferably by means of radiation.

## Revendications

1. Panneau (10), en particulier panneau mural, de plafond ou de plancher, comprenant une plaque support (11), ladite plaque support étant pourvue, au moins sur une surface principale d'une couche décorative (13) qui présente un décor qui est imprimé par un procédé numérique d'impression en quadrichromie à une valeur dpi de 200 à 1200,
dans lequel le décor est une imitation d'une surface de bois véritable et est formé d'un grand nombre de points colorés, **caractérisé en ce que** les points colorés présentent, à raison de plus de 90 %, une aire de 3000 µm² à 8000 µm².

2. Panneau (10) selon la revendication 1, **caractérisé en ce que** les points colorés présentent, à raison de plus de 90 %, une aire de 3500 µm² à 5000 µm².

3. Procédé pour l'impression de plaques, en particulier de panneaux muraux, de plafond ou de plancher (10), comprenant les étapes suivantes dans l'ordre indiqué :
(i) mise en place d'une plaque (11) ;
(ii) application d'une couche de fond (12) à l'aide d'un rideau liquide (31) de matériau de revêtement sur une surface principale de la plaque (11) ;
(iii) en option, séchage et/ou durcissement de la couche de fond (12) ;
(iv) traitement de la surface de la couche de fond (12) par au moins l'une des mesures suivantes :
a) traitement corona ;
b) traitement par plasma ;
c) application d'une huile en dilution aqueuse ;
(v) application d'une couche décorative, le décor étant une imitation d'une surface de bois véritable et étant imprimé par un procédé numérique d'impression en quadrichromie sur une surface principale de la plaque, le décor étant formé d'un grand de points colorés, qui à raison de plus de 90 % présentent une aire de 3000 µm² à 8000 µm², pour une valeur dpi de 200 à 1200.

4. Procédé pour l'impression de plaques selon la revendication 3, **caractérisé en ce que** le matériau de revêtement pour la couche de fond (12) est à base d'une dispersion aqueuse d'acrylate.

5. Procédé pour l'impression de plaques (10) selon la revendication 3 ou 4, **caractérisé en ce qu'**une couche primaire est appliquée entre les étapes (i) et (ii) et/ou entre les étapes (iii) et (iv).

6. Procédé pour l'impression de plaques (10) selon l'une des revendications précédentes, **caractérisé en ce que** l'huile est une huile naturelle, en particulier l'huile de lin, l'huile de palme, l'huile de tournesol ou l'huile de colza.

7. Procédé pour l'impression de plaques (10) selon l'une des revendications précédentes, **caractérisé en ce que** l'huile contient une proportion pondérale élevée d'acides gras insaturés, en particulier d'au moins 20 %, de préférence d'au moins 30 %, plus préférentiellement d'au moins 50 % et tout spécialement d'au moins 80 %.

8. Procédé pour l'impression de plaques (10) selon l'une des revendications précédentes, **caractérisé en ce qu'**on applique 0,1 à 10 g d'huile par m², de préférence 1,0 à 5 g/m², plus préférentiellement 1,5 à 3 g/m² et tout spécialement 1,6 à 2,5 g/m².

9. Procédé pour l'impression de plaques (10) selon l'une des revendications précédentes, **caractérisé en ce que**, dans la dilution aqueuse, les proportions étant en poids, on a pour 1 partie d'huile 1 à 30 parties d'eau, de préférence pour 1 partie d'huile 3 à 15 parties d'eau, plus préférentiellement pour 1 partie d'huile 4 à 10 parties d'eau et tout spécialement pour 1 partie d'huile 5 à 7 parties d'eau.

10. Procédé pour l'impression de plaques (10) selon la revendication précédente, **caractérisé en ce que** les points colorés présentent, à raison de plus de 90 %, une aire de 3500 µm² à 5000 µm².

11. Procédé pour l'impression de plaques (10) selon la revendication précédente, ou panneau selon la revendication 1 ou 2, **caractérisé en ce que** la valeur dpi est de 280 à 1200, de préférence de 300 à 400.

12. Procédé pour l'impression de plaques (10) selon l'une des revendications précédentes, **caractérisé en ce que** le décor est imprimé sur la surface principale de la plaque, et que l'on utilise pour l'impression une encre d'impression polymérisable ; et dans lequel, dans une étape ultérieure (vii), on applique une couche polymère (14), ladite couche polymère présentant de préférence un gradient de dureté tel que la dureté de la couche polymère (14) augmente d'une manière essentiellement continue quand augmente la profondeur à partir de la surface de la couche polymère (14).

13. Procédé pour l'impression de plaques (10) selon la revendication précédente, **caractérisé en ce que** l'encre d'impression est à base d'un acrylate polymérisable.

14. Procédé pour l'impression de plaques (10) selon l'une des revendications précédentes 12 ou 13, **caractérisé en ce que** la couche polymère est à base de l'un ou de plusieurs des acrylates suivants : diacrylate de 1,6-hexanediol, polyester acrylate, ester de l'acide acrylique de polyuréthanne, et diacrylate de dipropylèneglycol.

15. Procédé pour l'impression de plaques (10) selon la revendication précédente, **caractérisé en ce que** l'encre d'imprimerie et la couche polymère sont durcies ensemble, de préférence sous l'effet d'un rayonnement.
